Europäisches Patentamt

European Patent Office

Office européen des brevets

(19)

(11) Publication number: **0 303 868 B1**

## EUROPEAN PATENT SPECIFICATION

(12)

(45) Date of publication of patent specification: **09.03.94**

(51) Int. Cl.5: **G06F 7/00**, G06F 9/42

(21) Application number: **88112251.9**

(22) Date of filing: **28.07.88**

(54) **Stack control.**

(30) Priority: **06.08.87 DE 3726192**

(43) Date of publication of application:
**22.02.89 Bulletin 89/08**

(45) Publication of the grant of the patent:
**09.03.94 Bulletin 94/10**

(84) Designated Contracting States:
**AT CH DE ES FR GB IT LI NL SE**

(56) References cited:
**WO-A-83/03017**

**PATENT ABSTRACTS OF JAPAN, vol. 7, no.
210 (P-223)[1355], 16th September 1983; &
JP-A-58 103 043 (MATSUSHITA DENKI SAN-
GYO K.K.) 18-06-1983**

**MIDCON/85, CONFERENCE RECORD, 10th-
12th September 1985, pages 23/2,1-10, Los
Angeles, US; B. FURHT: "Risc architectures
with multiple overlapping windows"**

**ELEKTRONIK, vol. 36, no. 6, 20th March 1987,
pages 77-82, Munich, DE; B. CASE et al.:
"32-Bit-Prozessor unterstützt optimierende
Compiler"**

**THE 14TH ANNUAL INTERNATIONAL SYMPO-
SIUM ON COMPUTER ARCHITECTURE, Pitts-
burgh, 2nd-5th June 1987, pages 272-281,
IEEE; T.J. STANLEY et al.: "A performance
analysis of automatically managed top of
stack buffers"**

**Reduced Instruction Set Computer Architec-
tures for VLSI - ACM Doctoral Dissertation
Award 1984, Katevenis, M.G.H., pp. 52-64,
86-98, 130-141, 177-181**

(73) Proprietor: **Müller, Otto
Am Guckenbühl 10
D-78465 Konstanz(DE)**

(72) Inventor: **Müller, Otto
Am Guckenbühl 10
D-78465 Konstanz(DE)**

(74) Representative: **Riebling, Peter, Dr.-Ing.,
Patentanwalt
Postfach 31 60
D-88113 Lindau (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# EP 0 303 868 B1

## Description

A stack is a data structure where new data can be appended or deleted at one end. In block-oriented higher programming languages (PL1, Pascal, Modula-2 and Ada) stacks (there called run-time stacks) are used to pass parameters at subroutine calls and to create a new generation of local variables for the called subroutine appended to the generation of the caller. This new stack generation is called activation record or stack frame. Passed parameters can then also be addressed as local variables from within the new stack generation relative to a frame pointer FP.

For that purpose, the old instruction counter PC, the old frame pointer FP and mostly also the contents of the status register SR is stored at the address pointed to by the stack pointer SP (SP is thereby incremented).

The stack pointer SP points to the end of a stack frame; it can be incremented (via a frame instruction) by a new activated stack frame by the number of required local variables needed by this stack frame. If necessary, the frame pointer FP can also be decremented to point to the beginning of the passed parameters.

At return (via a return instruction) the old status is then restored.

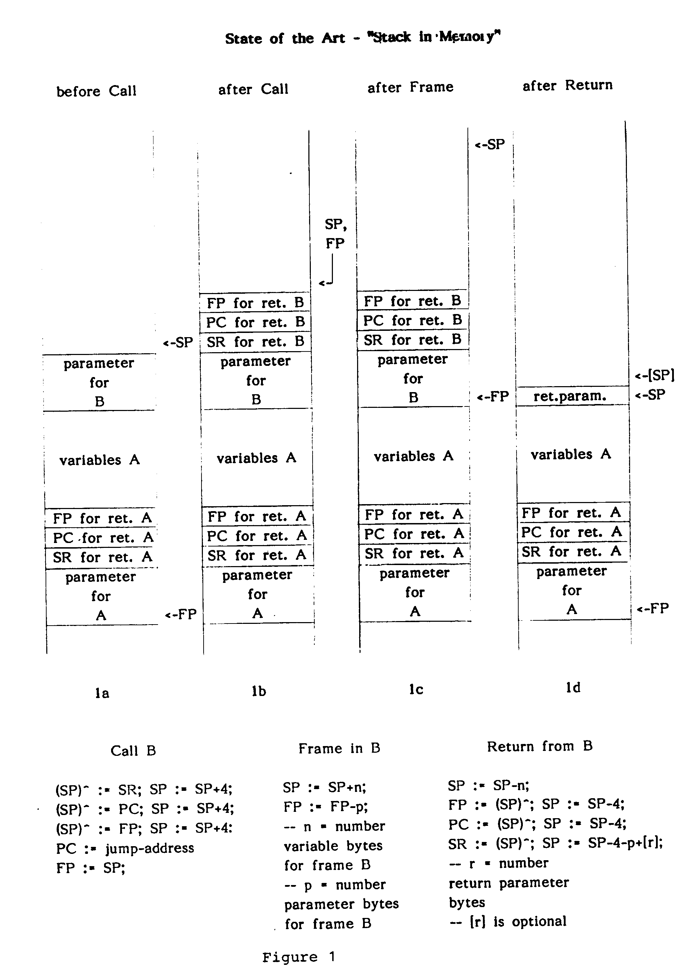

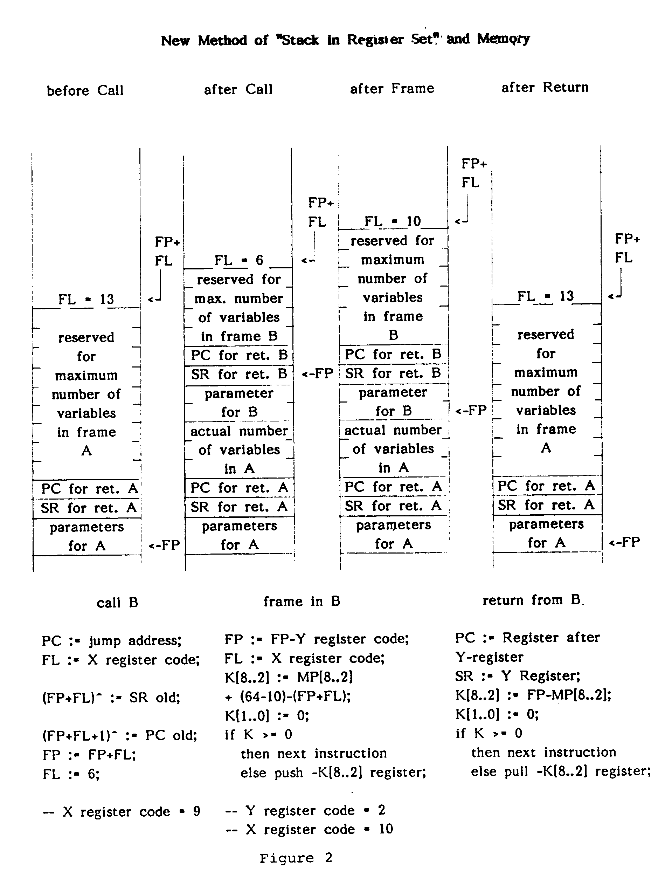

A typical implementation of these processes is shown in fig. 1a..1d. The whole stack is there completely held in memory.

The disadvantages there are:

1) Parameters must be stored on the stack by the caller and restored from the stack by the called subroutine. This means double memory traffic read / write.

2) Normally many of the caller's registers must be saved on the stack, either by the caller itself or by the called subroutine, and then be restored afterwards. This memory traffic is a waste of time.

Alternatively to this method, but with the same disadvantages, the following methods are used isolated or in combination:

1) The stack is addressed in descending order.

2) The status register SR is not stored (saved) when calling internal subroutines.

In citation D1 and D2 a generation pointer called CWP is used.

The CWP mentioned in the printed matter D1 and D2 (it is only 3 bits long) cannot be compared directly; therefore it is not identical with the generation pointer FP mentioned in the invention, because it is obvious that in the case of a completely variable stack register, the pointer must point at a particular register and not only at the beginning of a stack frame, as taught by D1 and D2.

The frame pointer according to the present invention can point at any register, while the CWP according to the printed matter D1 and D2 can always and only point at the beginning of a particular window frame.

It is the essential difference of the invention that in the case of a return instruction, the frame pointer is restored (returned) unchanged, while the CWP in citation D1 is not stored at all but reestablished by decrementing. Therefore the difference is made up by the fact that the old CWP value of the citation is reestablished by decrementing the old CWP in the unstored status word, while the old frame pointer value in line with the invention is part of the stored and returned status word. In other words, the status word according to the invention is reestablished by returning the stored status word. Therefore, in the case of the invention, the status word is returned unchanged, no calculations are carried out.

In D2 the generation pointer is passed during a subprogram call to the subprogramm being called. Hence it is not disclosed wether the generation pointer (FP) is passed unchanged and it is also not disclosed wether it is returned unchanged upon return from a subprogram. It is also not disclosed that the generation pointer (FP) is part of the status register.

An implementation using the citation D1 would need 16 different return instructions, because the return instruction would have to know which register of the old frame stack should be pointed at. Hence it follows that 16 different return codes would be required which would result in an excessive quantity of instruction codes and a more complex instruction decoding. Moreover, even when 16 different return codes were provided, the called subprogram would have to know which return code to use. In an implementation according to the citation, this information is not available in a called subprogram.

The program status according to the invention is stored with each call, and on return it is made the old program status word by retransfering it complete and unchanged. This is substantially different as compared with the citation D1.

Furthermore, D2 discloses only a "saved window pointer SWP" with a length of 3 bits, which can only address the beginning of a frame, whereby the present invention uses a memory pointer (MP) with the capability of addressing a word in memory. Thus, pushing and pulling of registers to and from memory can

2

be implemented via hardware by the present invention. Therefore the invention avoids software traps on register over- and underflow and register stack over- and underflow are handled much faster by the invention.

The device according to the invention is defined in claim 1.

The invention is further characterized by the following features:

a) At this mode of computation for the comparison of the FP with the MP, FP must only represent an integer range which is equal to the doubled number of registers in the register part of the stack. At a number of registers of e.g. 64, FP must represent a range of 0..127, which is a 7-bit binary number.

The length of FP reduced to 7 bits has the following advantages:

FP itself can be a part of the status register SR.

It can therefore be stored together with the SR by the call instruction and also restored together with the SR by the return instruction. That is, in comparison to method 2), one cycle and a whole register for saving the FP (SR contains FP) is omitted. This renders a simple control and provides one additional register per stack frame for the user program. This is a saving of 33% of controlled registers in a stack frame. A second advantage of the length of the FP is, that the anyhow existing register-address-calculation unit can be used for incrementing (at a call-instruction) or decrementing (at a return instruction) of the FP, while the 32-bit ALU can work in parallel. This parallel working saves further cycles.

The different modes of computation for the relation between MP and FP are explained in detail in the descriptions for the frame, return and set stack address instructions. At the set stack address instruction the memory address of FP can be computed from the only 7-bit long FP.

b) A stack pointer is not needed anymore. This is at a register-register architecture an essential simplification, because only register instructions (and memory instructions) must be implemented. Stack instructions (push and pull) are unnecessary. Out of the more compact instruction set results a very simple control, which is needed in fast reduced instruction set computers (RISC). The one task of the stack pointer, keeping track of intermediate results, is omitted at a register-register architecture in any case. The other task, the evaluation of the start address of a new stack frame, is solved by the invention in a different and simpler way:

The frame instruction determines only the maximum length of the actual stack frame, a call instruction appends generally a new stack frame not at the maximum length of the recent stack frame, but the call instruction only determines the beginning of the new stack frame in the limits of the recent stack frame.

This new method must not be changed by mistake with method 7) according to the state of the art, where the length of a new stack generation is determined by a call instruction according to the needs of the called subroutine.

Besides the omission of the stack pointer, the great advantage of the new method is that a new stack frame is adjacently joined only to the actually used variables (and optional passed parameters). Usually a new stack generation is appended to a stack generation which is substantially shorter than its maximum length.

The combination of feature a) and b) achieves with a stack register set of only 64 registers by economical use of registers nearly the same effect as one can achieve with conventional methods and a twice as large register set. This means a large saving of surface on a silicon chip and a shorter register read and write time (because of the smaller capacitances) and therefore a substantially shorter cycle time. Register reading, processing and writing back the result into the register takes with this method only one, very short cycle. Due to the large number of registers and the resulting longer register read and write cycles, these processing must be divided into several cycles at conventional implementations.

Another advantage of the reduced number of registers per stack frame is that at a task change less registers must be stored into the memory part of the stack and restored afterwards.

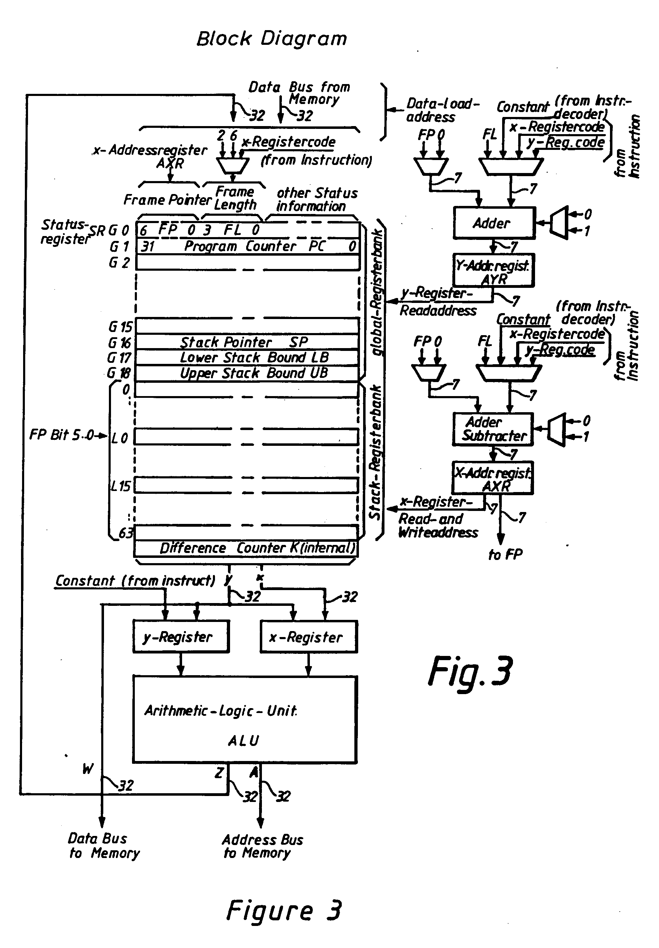

A 32-bit computer, which uses this method, is shown as a block diagram in fig. 3. Only details relevant for the invention are shown. The single components have the following functions:

**Stack Register Set:**

Registers 0..63 form the register part of the stack. They are addressed as local registers relative to bit 5..0 of the frame pointer FP, that is, the actual stack frame (max. 16 registers) can be addressed respectively as local registers (L0..max.L15) via the register code of an instruction. The absolute stack address is evaluated with the formula

absolute address := (FP + register code) modulo 64;

3

this means, the absolute address 0 follows directly the absolute address 63 (wrap around), and therefore the relative addresses can be considered as sequentially ascending.

**Global Registers:**

There are 19 global registers. Registers G0..G15 are addressed via the register code of an instruction. G16..G18 are addressed through a special instruction (double-word move). The following registers have special functions:

**Program Counter PC:**

G1 is the program counter. It is updated by the control unit to the address of the next instruction (if no branch) or loaded with a branch target address (if branch).

**Memory Pointer MP:**

G16 is the memory pointer MP. The memory pointer MP contains the address of the first free memory location in the memory part of the stack (top of memory stack), that is, the address at which the first stack register (absolutely addressed by MP bit 7..2) would be saved by a frame instruction in case of an overflow of the register part of the stack.

**Lower stack Bound LB:**

G17 is the lower stack bound LB. The LB contains the address of the lowest memory stack location. It is used by the return instruction to inhibit stack underflow.

**Upper Stack Bound UB:**

G18 is the upper stack bound UB. The UB contains the address of the highest memory stack location. It is used by the frame instruction to inhibit stack overflow.

**Status Register SR:**

G0 is the status register SR. Bit 20..0 contain usual information which is not relevant for the invention e.g condition bits (C, Z, V, N), several mode-bits and an instruction length counter ILC (bits 20..19) which indicates the length (1..3 halfwords) of the last executed instruction.
Bits 31..25 of SR contain the 7-bit frame pointer FP.
The least significant six bits of FP point to the beginning of the current stack frame, that is, they point to the local register L0. The FP is equal to bits 8..2 of the memory stack address at which the contents of L0 would be stored if pushed onto the memory part of the stack.
Bits 24..21 of SR contain the maximum frame length FL.
FL holds the maximum number (including passed parameters, return SR and return PC) of local registers usable in this frame. FL = 0 is always interpreted as FL = 16.

**Difference Counter K:**

K is an internal 9-bit counter. Only bits 8..0 are implemented as counter bits, bits 31..9 are always set equal to the sign bit 8 when K is read. Bits 1..0 are always 0.
K[8..2] contains the negated number of the stack register words, which must be pushed onto the memory stack by a frame instruction or pulled from the memory stack by a return instruction.

**Arithmetic-Logic-Unit ALU:**

The 32-bit ALU processes source(Y)- and destination(X)-operand arithmetically or logically including shift. The result can be restored to the destination(X)-register.

4

**X- and Y-Address Unit:**

For both the Y- and X-register address there is one address adder/subtracter with connected Y- or X-address register (AYR and AXR). The register addresses are evaluated in the decode cycle which precedes the data processing (execution) cycle and are stored in AYR or AXR.

**Y- and X-Register:**

The Y-register is a temporary memory for the source(Y)-operand. The X-register is a temporary memory for the destination(X)-operand.

Via a second write-path data words can be transferred directly from memory into the local and global registers.

For the following explanations and diagrams the following definitions are valid:

- A word in a register or in memory is 32-bit wide, bit 0 is the least significant bit, bit 31 is the most significant bit.
- Operand[x..y] denotes bits x through bits y of an operand. Example: MP[8..2] denotes bits 8..2 of MP.
- Expression ^ denotes an operand which is addressed by the value of the expression, that is, the value of the expression is used as address. Depending on the context, the expression addresses a memory location or a local register.
- := signifies the assignment symbol read as "is replaced by".
- >, > =, < denote the "greater than", "greater or equal" and "less than" relations.

**Call Instruction (Jump to a Subroutine):**

The jump address is placed in the program counter PC. The X-register code is loaded into FL.

The old status register SR is then loaded into the stack register addressed by (FP + FL) modulo 64, the old program counter PC is loaded into the stack register addressed by (FP + FL + 1) modulo 64. The old SR and PC represent the status at the beginning of the instruction, that is, before FL was overwritten by the X-register code and PC by the jump address. The old contents is held in registers, which always contain a copy of SR and PC at the beginning of the instruction.

The old contents of PC contains the return address used by the return instruction. The old contents of SR contains all information necessary for restoring the return status, especially FP and FL of the current stack frame.

Then the frame pointer FP is incremented by the value of FL (FL = 0 is interpreted as FL = 16) and the frame length FL is set to six, thus creating a new stack frame. The saved SR can be addressed from the new stack frame as local register L0, the saved PC as local register L1.

Because FL is set to six, the remaining registers L2..L5 are free for any use. The value of the X-register code (0 is interpreted as 16) must not exceed the value of FL of the current stack frame, otherwise the new stack generation would be appended beyond the maximum length denoted by the FL of the current stack frame and the beginning of the register part of the stack could be overwritten by mistake.

The call instruction does not check for a stack register overflow and therefore another call instruction must be preceded by a frame instruction. A frame instruction must also be executed, if the stack frame has to be restructured (decrementing the FP to access passed parameters, new maximum length FL, see frame instruction).

Usually the length of FL = 6, set by the call instruction, is not equal to the maximum length needed by the new stack frame.

In case that no parameters had been passed and no additional subroutine is called, no frame instruction has to be executed and FL = 6 is a good average for the maximum length. At a larger default length of FL there would be often too many stack registers reserved and therefore too many registers unnecessary saved on the memory stack.

The corresponding representation in Pascal is:

```
PC := jump address;
FL := X register code;

register(FP + FL)^ := SR old;        -- status of SR before call-instr.

register(FP + FL + 1)^ := PC old;  -- return address
FP := FP + FL;
FL := 6;
```

The call instruction is executed in 3 cycles.

**Trap Instruction:**

The trap instruction is executed similarly to the call instruction. Unlike the call instruction, SR is loaded into the stack register addressed by (FP + FL) modulo 64 and PC is loaded into the stack register addressed by (FP + FL + 1) modulo 64, because there is no register address available. FL is set to six. When the subprogram jump is taken, the subprogram entry address (specified by an address byte) is placed in the program counter PC and a supervisor mode flag (not relevant for the invention) in the status register SR is set.

The corresponding representation in Pascal is:

```
PC := entry-address                  -- jump in entry table

register(FP + FL)^ := SR old;        -- status of SR before trap-instr.

register(FP + FL + 1)^ := PC old;  -- return address
FP := FP + FL;
FL := 6;
supervisor-mode-bit := 1;
```

The trap instruction executes in three cycles.

**Frame Instruction:**

A frame instruction has the following assignments:
- Decrementing the FP to include passed parameters in the local register addressing range.
- Resetting the frame length FL to the actual number of registers needed for the current stack frame.
- Reservation of 10 reserve registers, to execute further call or trap instructions.

The frame pointer FP is decremented by the value of the Y-register code and the value of FL is replaced by the value of the X-register code.

Then the difference

free registers - (required registers + 10)

is calculated and placed in the difference counter K[8..2], K[1..0] is 0.

If the difference is not negative, the required number of local registers plus the reserve 10 registers are available in the register part of the stack and the frame instruction is finished.

If the difference is negative, a temporary memory pointer MPtemp is calculated as MPtemp := MP - K. (because the difference is negative, MPtemp is greater than MP).

MPtemp is then compared with the upper bound UB of the memory stack.

If MPtemp is higher than UB, that is, if the upper bound of the memory stack would be exceeded while saving stack registers, the FP and the FL are reset to their old values, the current (old) value of the MP remains unchanged and a trap to a specific error-handling subprogram (frame error) occurs .

If the upper bound is not exceeded, the number of stack registers equal to the evaluated negative difference in K[8..2] are stored into the memory part of the stack, beginning with the first stack register addressed by bit 7..2 of MP being stored to the location addressed by the MP. MP is then continuously incremented by 4 bytes (= one 32-bit-word) and the following stack registers are stored to the locations addressed by the incremented MP. The difference counter K is incremented by 4 bytes respectively; if K is incremented to 0, the loop is finished.

The reserve of 10 registers is to be used as follows:

- A call or trap instruction uses six registers.
- A possibly following jump to a subprogram, caused by an exception, uses another 2 registers (FL is set to 2);
- A "frame error" caused by execution of a frame instruction in an exception handler, uses the remaining two registers.

The corresponding representation in Pascal is:

```
FP := FP - Y register code;
FL := X register code;
K[8..2] := MP[8..2] + (64 -10) - (FP + FL); K[1..0] := 0;
            -- 64 = number of stack registers, 10 = reserve
if K >= 0 then next instruction;
            -- instruction is finished, if K not negative
MPtemp := MP - K;        -- MPtemp > MP, because K is negative
if MP > UB then
    FP := old FP;
    FL := old FL;
    trap -> Frame Error;   -- overflow of memory part of the stack
repeat
    memory MP^ := stack register MP[7..2]^;
            -- save stack registers -> memory part of the stack
    MP := MP + 4;
    K := K + 4;
until K = 0;
```

**Return Instruction:**

The return instruction returns control from a subprogram. The contents of the register addressed by the Y-register code is loaded into the status register SR, the contents of the following register is loaded into the program counter PC.

Then it is checked whether the restored stack frame is fully contained in the register part of the stack. This is true if the contents of the frame pointer FP, expanded to 32 bit, is not lower than the contents of MP, that is, the expanded contents of FP does not point to a location in memory stack. Due to the maximum difference of 64 (number of stack registers) between the MP and the expanded FP, it is sufficient to compare bit 8..2 of the MP with the FP.

The difference FP - MP[8..2] is therefore placed into K[8..2], K[1..0] is 0. If the difference is not negative, the current stack frame is fully contained in the register part of the stack and the return instruction is finished.

A negative difference in K[8..2] indicates the number of registers which must be loaded from the memory part of the stack.

With K, there is a temporary memory pointer MPtemp calculated as

MPtemp := MP + K

7

MPtemp is then compared with the lower bound LB of the memory stack.

If MPtemp is lower than LB, that is, the lower bound of the memory stack would be exceeded, the old value of the MP remains unchanged and a trap to a specific error-handling subprogram (range error) occurs.

If MPtemp is not lower than LB, MPtemp is loaded into MP. A number of 32-bit-words, according to the difference $K[8..2]$, is loaded into the stack registers, beginning with the first word addressed by MPtemp being stored to the stack register with the register address indicated by bit 7..2 of MPtemp. MPtemp is then repeatedly incremented by 4 bytes and further words are transferred. The difference counter K is also incremented by 4 bytes respectively; if K is incremented to 0, the loop is finished.

The corresponding representation in Pascal is:

```
PC := register following Y register;
SR := Y Register;
K[8..2] := FP - MP[8..2]; K[1..0] := 0;
if K >= 0 then next instruction;
        -- instruction is finished if K is not negative
MPtemp := MPtemp + K;   -- MPtemp < MP, because K is negative
if MP < UB then trap -> Range Error;
MP := MPtemp;
repeat
    stack register MPtemp[7..2]^ := MPtemp^;
            -- load memory part of the stack -> stack register
    MPtemp := MPtemp + 4;
    K := K + 4;
until K = 0;
```

**Set Stack Address Instruction:**

The set stack address instruction expands the frame pointer FP to the length of the memory pointer MP and places the result in the register addressed by the X-register code. FP itself remains unchanged.

The expanded FP-address is the address where the local register L0 would be stored in memory stack.

This algorithm assumes that the expanded FP-address can only be equal to or higher than the address in MP between a range of 0..63 32-bit words.

For evaluation of the expanded FP-address, bits 31..9 of MP, FP and two zero bits are concatenated to a single 32-bit-address. If bit 8 of MP = 1 and bit 6 (the highest bit) of MP = 0, a carry is added to bit 9 of this address for correction.

The corresponding formula is:

```
X register := MP[31..9] // FP // 00 + carry into bit 9
    -- carry into bit 9 := (MP[8] = 1 and FP[6] = 0)
    -- // signifies the concatenation
```

The set stack address instruction thus calculates the stack address of the current stack frame. Provided the stack address of a stack frame is saved, for example, in a global register, any data in this stack frame can then be addressed also from within all younger generations of stack frames by using the saved address independent whether the data is located in the memory part or the register part of the stack.

At load and store instructions, this is achieved with a special stack address mode. The effective address is thereby calculated from the stack address plus a displacement given in the memory instruction. The effective stack address is then compared with the memory pointer MP. If the effective stack address is lower than the value of the MP, the addressed location is in the memory part of the stack and a memory access occurs; otherwise, the addressed location is in a stack register addressed by bits 7..2 of the effective stack address.

## Claims

1. A computer especially a microprocessor, which computer includes a stack control and one or more memories, in which a part of the memory is used as a runtime stack, and in which said stack is divided further into a register part and a memory part, and in which also the top part of the stack is implemented as a register set and the recent - or most recent - stack generation is held in this register set, and the begin address of the most recent stack generation is held in a generation pointer (FP), which is passed during a subprogram call to the subprogram being called, where also a status register (SR), which contains the recent state of the computer, and where also the old state of the program counter (PC), which contains the return address, are generated
**characterised in that**,
the memory address of the first register to be pushed into the memory part, that is the topmost free address space of the stack in memory, is held in a memory pointer (MP) which is incremented/decremented during pushing the stack registers and is decremented/incremented during pulling of these registers
and that the generation pointer (FP)is a part of the status register (SR),
and that during a subprogram call the status register (SR) and the program counter (PC) are saved in the register part of the stack and also the generation pointer (FP) is saved during a subprogram call, wherein the generation pointer (FP) is saved unchanged with the status register (SR) at a call instruction in the same cycle and in the same valid state, and that on return from the subprogram the generation pointer (FP) is part of the status word which is returned into the status register (SR), thus saving the generation pointer (FP) permits a variable stack frame length whereby the old stack frame length can be restored by restoring the saved generation pointer (FP).

2. Computer according to claim 1,
**characterised in that** the subprogram call does not append the new stack generation at the maximum length of the recent stack generation, but appends the new stack generation at the actual current length of the recent stack generation, thereby omitting the stack pointer.

3. Computer according to claim 1 or 2,
**characterised in that** the generation pointer (FP) is a minimum of 1 bit longer than is required to hold the address range of the register set, but shorter than the address range of a full memory address, e.g. 32 bits.

4. Computer according to one of the claims 1 through 3,
**characterised in that** the generation pointer (FP) which addresses the registers in the register part of the stack, is expanded to a 32-bit stack address by the following calculation method, the stack address covers the memory part of the stack and the register part of the stack as it would be addressed when pushed into the memory part: __stack address: = MP __ 31..9 // FP // 00 + carry into bit 9-- carry into bit 9: = MP 8 = 1 and FP 6 = 0-

5. Computer according to one of the claims 1 through 4,
**characterised in that** the generation pointer (FP) is incremented or decremented in the address calculation unit coincidentally with the calculation of other values e.g. 32-bit operands in the ALU.

6. Computer according to one of claims 1 through 5, **characterised in that** at the execution of a frame instruction it is checked whether the available number of free stack registers is sufficient and, if this is not the case, at least the missing number of stack registers is pushed into the memory part of the stack.

7. Computer according to claim 6, **characterised in that** the frame instruction, in addition to the number of pushed registers pushes a number of additional registers so that a reserve number of registers needed by the call instruction and two further exception traps is created.

**8.** Computer according to one of the claims 1 through 7, **characterised in that** coincidentally with the pushing of stack registers by a frame instruction the upper stack bound is checked for an overflow.

**9.** Computer according to claim 8, **characterised in that** at a possible overflow the registers are not saved, but the computer branches to an error handling subprogram.

**10.** Computer according to one of the claims 1 through 9, **characterised in that** at the execution of a return instruction it is checked by comparison of the memory pointer (MP) with the generation pointer (FP) of the restored stack frame whether the restored stack frame is fully contained in the stack registers, and in case it is not fully contained, the missing number of stack registers is loaded from the memory part of the stack.

**11.** Computer according to one of the claims 1 through 10, characterised in that coincidentally with the loading of stack registers by a return instruction the lower stack bound is checked for an overflow.

**12.** Computer according to claim 11, **characterised in that** at a possible underflow the stack registers are not restored, but the computer branches to an error handling subprogram.

**13.** Computer according to one of the claims 1 through 12, **characterised in that** the status register (SR) contains the maximum frame length (FL) and (FL) contains the maximum number of usable local registers, that is, number of passed parameters + local variables + parameters to be passed, in the current stack generation.

**14.** Computer according to claim 13, **characterised in that** the value of FL = 0 is interpreted as FL = 16

**15.** Computer according to claim 12 and 13, **characterised in that** the maximum frame length (FL) is used to determine the beginning of a new stack generation at the local register address FP + FL in the case where a new stack frame is not created by a subprogram call, but by an exception or trap; only in this case the maximum length of the maxi mum frame length (FL) is used.

**16.** Computer according to one of the claims 1 through 15, **characterised in that** the new generation pointer (FP) is set by a frame instruction to point to address the first parameter passed by the calling program.

**17.** Computer according to one of the claims 1 through 16, **characterised in that** a frame instruction sets the maximum frame length (FL), checks whether the available number of free stack registers is sufficient and if this is not the case, pushes at least the missing number plus a reserve number of stack registers into the memory part of the stack.

**Patentansprüche**

**1.** Ein Computer, speziell ein Microprozessor, wobei der Computer eine Stapelspeichersteuerung und einen oder mehrere Speicher besitzt, wobei ein Teil des Speichers als Laufzeitstapel benutzt wird und wobei der Stapel des weiteren in einen Registerteil und einen Speicherteil aufgeteilt ist, und bei welchem ebenso der obere Teil des Stapels als ein Registersatz ausgeführt ist und die neueste - oder allerneueste - Stapelgeneration in diesen Registersatz gehalten wird, und die Anfangsadresse der allerneuesten Stapelgeneration in einem Rahmenzeiger (FP) gehalten wird, welcher während eines Unterprogrammaufrufes an das aufgerufene Unterprogramm übergeben wird, in dem auch ein Statusregister (SR), welches den letzten Zustand des Computers enthält und der alte Status des Programmzählers (PC), welcher die Rücksprungadresse enthält, erzeugt werden, **dadurch gekennzeichnet**, daß die Speicheradresse des ersten Registers, das im Speicherteil gespeichert wird, d.h. der oberste freie Adressraum des Stapels im Speicher in einem Speicherzeiger (MP) gehalten wird, welcher während des Speicherns der Stapelregister inkrementiert/dekrementiert wird und während des Wiederholens dieser Register dekrementiert/entkrementiert wird und daß der Rahmenzeiger (FP) ein Teil des Statusregisters SR ist, und während eines Unterprogrammaufrufs das Statusregister (SR) und der Programmzähler (PC) im Registerteil des Stapels gespeichert werden und auch der Rahmenzeiger FP während eines Unterprogrammaufrufs gespeichert wird, wobei der Rahmenzeiger (FP) während eines Aufrufbefehls im selben Zyklus und im selben gültigen Status zusammen mit dem Statusregister (SR) unverändert gespeichert wird und daß beim Rücksprung aus dem Unterprogramm der Rahmenzeiger (FP) Teil des Statuswortes ist, welches in das Statusregister (SR) rückgegeben wird, wobei das Speichern des Rahmenzeigers (FP) eine variable Stapelrahmenlänge erlaubt und die alte Stapelrahmenlänge durch Wiederherstellen des Gespeicherten Rahmenzeigers (FP) wieder hergestellt werden kann.

2. Computer nach Anspruch 1, **dadurch gekennzeichnet**, daß ein Unterprogrammaufruf die neue Stapelgeneration nicht an die maximale Länge der letzten Stapelgeneration anhängt, sondern die neue Stapelgeneration an der aktuell laufenden Läge der letzten Stapelgeneration angehängt wird, und dabei der Stapelzeiger wegfällt.

3. Computer nach den Ansprüchen 1 und 2, **dadurch gekennzeichnet**, daß der Rahmenzeiger (FP) mindestens 1 Bit länger ist als benötigt, um den Adressbereich des Registersatzes zu halten, aber kürzer ist als der Adressbereich einer vollen Speicheradresse, z.B. 32 Bits.

4. Computer nach einem der Ansprüche 1 bis 3, **dadurch gekennzeichnet**, daß der Rahmenzeiger (FP), welcher die Register im Registerteil des Stapels adressiert, auf eine 32 Bit Stapeladresse ausgeweitet wird, durch die folgende Berechnungsmethode, wobei die Stapeladresse den Speicherteil des Stapels überdeckt und den Registerteil des Stapels als wie dieser adressiert werden würde, wenn er in dem Speicherteil gespeichert werden würde:

Stapeladresse: = MP[31..9] //FP//00 + Übertrag nach Bit 9 - Übertrag nach Bit 9:= MP[8] = 1 und FP [6] = 0

5. Computer nach einem der Ansprüche 1 - 4, **dadurch gekennzeichnet**, daß der Rahmenzeiger (FP) in der Adressberechnungseinheit gleichzeitig mit der Berechnung von anderen Werten inkrementiert oder dekrementiert wird, z.B. wie 32 Bit Operanden in der ALU.

6. Computer nach einem der Ansprüche 1 - 5, **dadurch gekennzeichnet**, daß während der Ausführung eines Rahmenbefehls geprüft wird, ob die verfügbare Anzahl von freien Stapelregistern ausreichend ist, und wenn das nicht der Fall ist, mindestens die fehlende Anzahl von Stapelregistern im Speicherteil des Stapels gespeichert wird.

7. Computer nach Anspruch 6, **dadurch gekennzeichnet**, daß der Rahmenbefehl zusätzlich zur Anzahl der gespeicherten Register eine Anzahl weiterer Register speichert, so daß eine Reserveanzahl Register, gebraucht vom Aufrufbefehl und zwei weiteren Ausnahmebefehlen, erzeugt wird.

8. Computer nach einem der Ansprüche 1 - 7, **dadurch gekennzeichnet**, daß gleichzeitig mit dem Speichern der Stapelregister durch den Rahmenbefehl die obere Stapelgrenze auf Überlauf geprüft wird.

9. Computer nach Anspruch 8, **dadurch gekennzeichnet**, daß ein möglicher Überlauf der Register nicht abgespeichert wird, der Computer aber zu einem Fehlerbearbeitungsunterprogramm verzweigt.

10. Computer nach einem der Ansprüche 1 - 9, **dadurch gekennzeichnet**, daß während der Ausführung eines Rücksprungbefehls durch Vergleich des Speicherzeigers (MP) mit dem Rahmenzeiger (FP) des wiederhergestellen Stapelrahmens geprüft wird, ob der wiederhergestellte Stapelrahmen vollständig in den Stapelregistern enthalten ist und im Falle er nicht vollständig enthalten ist, die fehlende Anzahl von Stapelregistern vom Speicherteil des Stapels geladen werden.

11. Computer nach einem der Ansprüche 1 - 10, **dadurch gekennzeichnet**, daß gleichzeitig mit dem Laden des Stapelregisters durch einen Rücksprungbefehl die untere Grenze des Stapels auf Überlauf geprüft wird.

12. Computer nach Anspruch 11, **dadurch gekennzeichnet**, daß bei einem möglichen Überlauf die Stapelregister nicht gespeichert werden, der Computer aber zu einem Fehlerbehandlungsunterprogramm verzweigt.

**13.** Computer nach einem der Ansprüche 1 - 12, **dadurch gekennzeichnet**, daß Statusregister (SR) die maximale Rahmenlänge (FL) enthält und (FL) die maximale Anzahl von nutzbaren lokalen Registern enthält, was gleichbedeutend ist mit der Anzahl von übergebenen Parametern plus lokale Variablen plus noch zu übergebende Parameter innerhalb der laufenden Stapelgeneration.

**14.** Computer nach Anspruch 13, **dadurch gekennzeichnet**, daß der Wert von FL = 0 gleichbedeutend mit FL = 16 interpretiert wird.

**15.** Computer nach den Ansprüchen 12 und 13, **dadurch gekennzeichnet**, daß die maximale Rahmenlänge (FL) benutzt wird, um den Anfang einer neuen Stapelgeneration an einer lokalen Registeradresse FP + FL zu bestimmen, im Falle ein neuer Stapelrahmen nicht durch einen Unterprogrammaufruf nicht erzeugt wird, sondern durch eine Ausnahmeregelung oder Trap; nur in diesem Falle wird die maximale Länge der maximalen Rahmenlänge (FL) genutzt.

**16.** Computer nach einem der Ansprüche 1 - 15, **dadurch gekennzeichnet**, daß der neue Rahmenzeiger (FP) durch einen Rahmebefehl gesetzt wird, um auf den ersten Parameter zu zeigen, der von dem aufrufenden Programm übergeben wird.

**17.** Computer nach einem der Ansprüche 1 - 16, **dadurch gekennzeichnet**, daß ein Rahmenbefehl die maximale Rahmenlänge (FL) setzt und prüft, ob die Anzahl der freien Stapelregister ausreichend ist und, wenn das nicht der Fall ist, mindestens die fehlende Anzahl plus einer Reserveanzahl von Stapelregistern im Speicherteil des Stapels speichert.

**Revendications**

**1.** Ordinateur, en particulier microprocesseur, comportant une commande de pile et une ou plusieurs mémoires, dans lequel une partie de la mémoire sert de pile de temps d'exécution, ladite pile étant encore divisée en une partie registre et une partie mémoire, dans lequel également la partie supérieure de la pile est mise en oeuvre sous la forme d'un jeu de registres et la génération de pile récente - ou la plus récente - est conservée dans ce jeu de registres, l'adresse de début de la génération de pile la plus récente étant conservée dans un pointeur de génération (FP) qui est transmis pendant un appel de sous-programme au sous-programme appelé, et dans lequel également sont générés un registre d'état (SR) contenant l'état récent de l'ordinateur, et l'ancien état du compteur d'instructions (PC) contenant l'adresse de retour,
**caractérisé en ce que**,
l'adresse de mémoire du premier registre destiné à être chargé dans la partie mémoire, c'est-à-dire l'espace d'adresse libre extrême supérieur de la pile dans la mémoire, est conservée dans un pointeur de mémoire (MP) qui est incrémenté/décrémenté pendant le chargement des registres de pile et décrémenté/incrémenté pendant le déchargement de ces registres,
le pointeur de génération (FP) fait partie du registre d'état (SR),
le registre d'état (SR) et le compteur d'instructions (PC) sont, pendant un appel de sous-programme, sauvegardés dans la partie registre de la pile, tandis que le pointeur de génération (FP) est également sauvegardé pendant un appel de sous-programme, le pointeur de génération (FP) étant sauvegardé sans être modifié avec le registre d'état (SR) lors d'une instruction d'appel au cours du même cycle et dans le même état valide,
le pointeur de génération (FP) fait, au retour du sous-programme, partie du mot d'état qui est renvoyé dans le registre d'état (SR), moyennant quoi, la sauvegarde du pointeur de génération (FP) permet une longueur de trame de pile variable, ce qui permet de rétablir l'ancienne longueur de trame de pile grâce au rétablissement du pointeur de génération (FP) sauvegardé.

**2.** Ordinateur selon la revendication 1,
**caractérisé en ce que** l'appel de sous-programme n'ajoute pas la nouvelle génération de pile au niveau de la longueur maximale de la génération de pile récente, mais l'ajoute au niveau de la longueur réelle en cours de la génération de pile récente, pour ainsi sauter le pointeur de pile.

**3.** Ordinateur selon la revendication 1 ou 2,
**caractérisé en ce que** le pointeur de génération (FP) a une longueur supérieure d'au moins 1 binaire à la longueur requise pour contenir l'espace d'adresse du jeu de registres, mais inférieure à l'espace d'adresse d'une adresse de mémoire complète, par exemple 32 binaires.

4. Ordinateur selon l'une des revendications 1 à 3, **caractérisé en ce que** le pointeur de génération (FP) qui adresse les registres dans la partie registre de la pile, est étendu à une adresse de pile à 32 binaires grâce à la méthode de calcul suivante, l'adresse de pile couvrant la partie mémoire de la pile et la partie registre de celle-ci telle qu'elle serait adressée lors de son chargement dans la partie mémoire : _ adresse de pile : = MP _31..9 //FP//00 + report dans binaire 9-- report dans binaire 9: = MP 8 = 1 et FP 6 = 0-

5. Ordinateur selon l'une des revendications 1 à 4, **caractérisé en ce que** le pointeur de génération (FP) est incrémenté ou décrémenté dans l'unité de calcul d'adresse en même temps que' le calcul d'autres valeurs, comme par exemple des opérandes à 32 binaires, dans l'unité arithmétique et logique (ALU).

6. Ordinateur selon l'une des revendications 1 à 5, **caractérisé en ce que** lors de l'exécution d'une instruction de trame, il est vérifié si le nombre disponible de registres de pile libres est suffisant et, si ce n'est pas le cas, au moins le nombre manquant de registres de pile est chargé dans la partie mémoire de la pile.

7. Ordinateur selon la revendication 6, **caractérisé en ce que** l'instruction de trame charge, en plus du nombre de registres chargés, un certain nombre de registres supplémentaires afin que soient créés un certain nombre de registres de réserve requis par l'instruction d'appel et deux autres interruptions d'exception.

8. Ordinateur selon l'une des revendications 1 à 7, **caractérisé en ce que** simultanément au chargement de registres de pile par une instruction de trame, la limite supérieure de la pile est contrôlée pour vérifier s'il y a un dépassement de capacité.

9. Ordinateur selon la revendication 8, **caractérisé en ce qu'**en cas d'éventuel dépassement de capacité, les registres ne sont pas sauvegardés, mais l'ordinateur se branche sur un sous-programme de traitement d'erreur.

10. Ordinateur selon l'une des revendications 1 à 9, **caractérisé en ce que**, lors de l'exécution d'une instruction de retour, il est vérifié par comparaison du pointeur de mémoire (MP) avec le pointeur de génération (FP) de la trame de pile rétablie, si cette dernière est entièrement contenue dans les registres de pile et, si ce n'est pas le cas, le nombre manquant de registres de pile est chargé à partir de la partie mémoire de la pile.

11. Ordinateur selon l'une des revendications 1 à 10, caractérisé en ce que simultanément au chargement de registres de pile par une instruction de retour, la limite inférieure de la pile est contrôlée pour vérifier s'il y a un dépassement de capacité.

12. Ordinateur selon la revendication 11, **caractérisé en ce qu'**en cas d'éventuel dépassement de capacité, les registres de pile ne sont pas rétablis, mais l'ordinateur se branche sur un sous-programme de traitement d'erreur.

13. Ordinateur selon l'une des revendications 1 à 12, **caractérisé en ce que** le registre d'état (SR) contient la longueur de trame maximale (FL) et (FL) contient le nombre maximal de registres locaux utilisables, c'est-à-dire nombre de paramètres transmis + variables locales + paramètres à transmettre, dans la génération de pile en cours.

14. Ordinateur selon la revendication 13, **caractérisé en ce que** la valeur de FL = 0 est interprétée comme FL = 16

15. Ordinateur selon les revendications 12 et 13, **caractérisé en ce que** la longueur de trame maximale (FL) sert à déterminer le début d'une nouvelle génération de pile au niveau de l'adresse de registre local FP + FL dans le cas où une nouvelle trame de pile n'est pas créée par un appel de sous-programme, mais par une exception ou une interruption; dans ce cas uniquement, la longueur maximale de la longueur de trame maximale (FL) est utilisée.

16. Ordinateur selon l'une des revendications 1 à 15, **caractérisé en ce que** le pointeur de nouvelle génération (FP) est réglé par une instruction de trame pour être pointé afin d'adresser le premier paramètre transmis par le programme d'appel.

17. Ordinateur selon l'une des revendications 1 à 16, **caractérisé en ce qu'**une instruction de trame détermine la longueur de trame maximale (FL), vérifie si le nombre disponible de registres de pile libres est suffisant et, si ce n'est pas le cas, charge au moins le nombre manquant plus un nombre de réserve de registres de pile dans la partie mémoire de la pile.

**State of the Art - "Stack in Memory"**

| before Call | after Call | after Frame | after Return |
|---|---|---|---|

Figure 1

Call B

```
(SP)^ := SR; SP := SP+4;
(SP)^ := PC; SP := SP+4;
(SP)^ := FP; SP := SP+4:
PC := jump-address
FP := SP;
```

Frame in B

```
SP := SP+n;
FP := FP-p;
-- n = number
variable bytes
for frame B
-- p = number
parameter bytes
for frame B
```

Return from B

```
SP := SP-n;
FP := (SP)^; SP := SP-4;
PC := (SP)^; SP := SP-4;
SR := (SP)^; SP := SP-4-p+[r];
-- r = number
return parameter
bytes
-- [r] is optional
```

## New Method of "Stack in Register Set" and Memory

| before Call | after Call | after Frame | after Return |
|---|---|---|---|

```
                                                      FP+
                                                      FL
                                           FP+      <-
                                   FP+      FL     |   FL = 10
                         FP+        FL    |   FL = 6  <-|  reserved for
                          FL     |  FL = 6   <-      maximum              FP+
          FL = 13    <-|  reserved for          number of              FL
                         max. number          variables            FL = 13   <-
       reserved          of variables          in frame              reserved
         for             in frame B               B                     for
       maximum           PC for ret. B       PC for ret. B           maximum
      number of          SR for ret. B  <-FP SR for ret. B          number of
      variables          parameter           parameter              variables
      in frame             for B               for B       <-FP      in frame
         A               actual number       actual number             A
                          of variables        of variables
                             in A                 in A
      PC for ret. A      PC for ret. A       PC for ret. A          PC for ret. A
      SR for ret. A      SR for ret. A       SR for ret. A          SR for ret. A
       parameters         parameters          parameters             parameters
         for A     <-FP     for A               for A                   for A     <-FP
```

| call B | frame in B | return from B |
|---|---|---|

```
PC := jump address;      FP := FP-Y register code;    PC := Register after
FL := X register code;   FL := X register code;       Y-register
                         K[8..2] := MP[8..2]          SR := Y Register;
(FP+FL)^ := SR old;      + (64-10)-(FP+FL);           K[8..2] := FP-MP[8..2];
                         K[1..0] := 0;                K[1..0] := 0;
(FP+FL+1)^ := PC old;    if K >= 0                    if K >= 0
FP := FP+FL;               then next instruction        then next instruction
FL := 6;                  else push -K[8..2] register;  else pull -K[8..2] register;

-- X register code = 9   -- Y register code = 2
                         -- X register code = 10
```

Figure 2

16

## Block Diagram

*Fig.3*

Figure 3